# DEMANDE DE BREVET EUROPEEN

(11) **EP 4 752 766 A1**
(43) Date de publication de la demande: **03.06.2026**
(21) Numéro de dépôt: 25217167.3
(22) Date de dépôt: 20.11.2025
(51) Int. Cl.: G06F 21/57

(54) **PROCÉDÉ DE CONFIGURATION D'UN MICROCONTRÔLEUR**

(30) Priorité: 29.11.2024 FR 2413245
(71) Demandeur: STMicroelectronics International N.V., 1228 Plan-les-Ouates, Genève (CH)
(72) Inventeur: BENHAMMADI, Jawad, 38800 PONT DE CLAIX (FR)
(74) Mandataire: Cabinet Beaumont

(57) **Abrégé**

La présente description concerne un procédé de configuration d'un microcontrôleur (100), comprenant l'autorisation de modifier un registre contenant des octets d'options (User_OB1) de configuration du microcontrôleur si un premier étage de programme de démarrage (ROT) du microcontrôleur (100), sécurisé par le fabricant du microcontrôleur, est exécuté ; et si un niveau d'autorisation d'accès de programme du microcontrôleur correspond à un état de fabrication du microcontrôleur (HDPL0) ou un état où seul un premier étage de programme de démarrage du microcontrôleur (HDPL1) est autorisé.

## Description

### Domaine technique

La présente description concerne de façon générale les procédés de configuration de microcontrôleurs ainsi que les microcontrôleurs mettant en œuvre ces procédés.

### Technique antérieure

Le changement de paramètres de sécurité des microcontrôleurs actuels ne peut se faire que lors d'étapes de fabrication que ce soit chez le fabricant ou un sous-traitant.

### Résumé de l'invention

Il existe un besoin de pouvoir modifier la configuration de microcontrôleurs après leur fabrication et notamment leurs paramètres de sécurité ou des tailles de mémoire disponibles.

Un mode de réalisation pallie tout ou partie des inconvénients des procédés de configuration connus.

Un mode de réalisation prévoit un procédé de configuration d'un microcontrôleur, comprenant l'autorisation de modifier un registre contenant des octets d'options de configuration du microcontrôleur si :
- un premier étage de programme de démarrage du microcontrôleur, sécurisé par le fabricant du microcontrôleur, est exécuté ; et
- un niveau d'autorisation d'accès de programme du microcontrôleur correspond à un état de fabrication du microcontrôleur ou un état où seul un premier étage de programme de démarrage du microcontrôleur est autorisé.

Selon un mode de réalisation, un premier programme, sécurisé par le fabricant du microcontrôleur, est lu par ledit premier étage de programme de démarrage et, si l'autorisation a été validée, la valeur d'un ou des octets d'options du registre est modifiée suivant des instructions comprises dans le premier programme.

Selon un mode de réalisation, ledit premier étage de programme de démarrage est stocké dans une mémoire système de type FLASH du microcontrôleur.

Selon un mode de réalisation, lorsque le premier étage de programme de démarrage est exécuté, alors un premier signal est mis à une valeur donnée.

Selon un mode de réalisation, le premier signal est mis à une valeur 0xA3 lorsque le premier étage de programme de démarrage est exécuté.

Selon un mode de réalisation, le niveau d'autorisation d'accès de programme du microcontrôleur est donné par un compteur monotonique croissant.

Selon un mode de réalisation, la valeur nulle du compteur monotonique correspond à l'état où le microcontrôleur est en fabrication.

Selon un mode de réalisation, la valeur 1 du compteur monotonique correspond à l'état où seul le premier étage de programme de démarrage est autorisé.

Selon un mode de réalisation, la modification des octets d'option est autorisée si le premier signal a ladite valeur donnée et si le compteur monotonique a la valeur nulle ou la valeur 1.

Selon un mode de réalisation, le premier étage de programme de démarrage du microcontrôleur et le premier programme sont sécurisés avec une ou des clés de sécurité.

Selon un mode de réalisation, le registre comprend plusieurs catégories d'octets d'options différents pour contrôler l'activation ou la désactivation d'une même caractéristique de configuration du microcontrôleur ;
une première catégorie d'octets d'options étant inscriptible uniquement pendant une phase de production par le fabricant du microcontrôleur ; et
une deuxième catégorie d'octets d'options étant inscriptible, après production, si l'autorisation est validée.

Selon un mode de réalisation, préalablement à l'étape d'autorisation, le premier programme est chargé dans une mémoire de téléchargement du microcontrôleur.

Selon un mode de réalisation, après le chargement du premier programme, le microcontrôleur est réinitialisé.

Selon un mode de réalisation, lesdites une ou des valeurs d'octets d'option qui ont été modifiées, sont réinitialisées, au bout d'un temps donné, à leur valeur avant modification.

Un mode de réalisation prévoit un microcontrôleur, comprenant un registre d'octets d'options de configuration, et configuré pour mettre en œuvre le procédé de configuration décrit ci-dessus.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 illustre de façon très schématique et sous forme de blocs, un exemple de microcontrôleur du type auquel s'appliquent les modes de réalisation décrits ;
la figure 2 illustre un procédé de configuration du microcontrôleur de la figure 1 ; et
la figure 3 illustre une étape du procédé de la figure 2.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % ou à 10° près, de préférence à 5 % ou à 5° près.

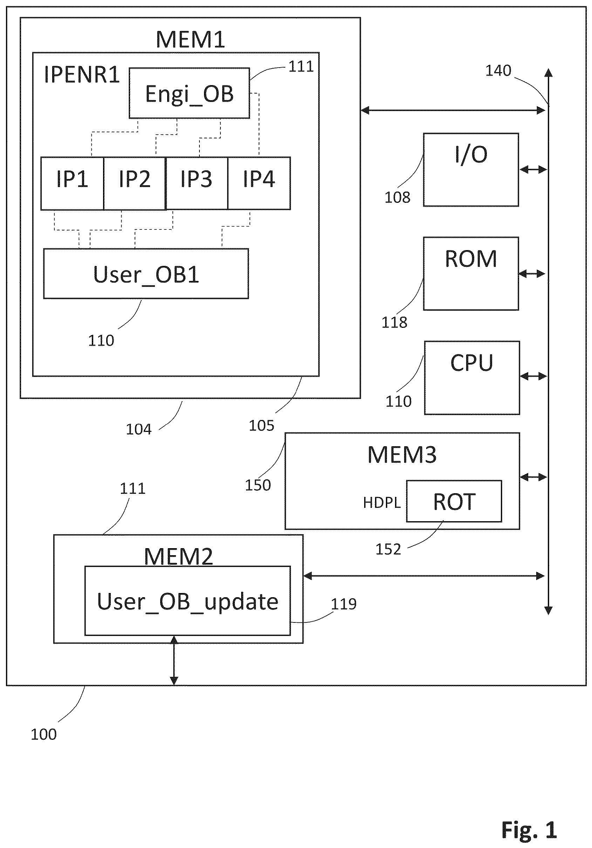

La figure 1 illustre de façon très schématique et sous forme de blocs, un exemple de microcontrôleur 100 du type auquel s'appliquent les modes de réalisation décrits.

Dans l'exemple représenté, le microcontrôleur 100 comprend une mémoire 104 (MEM1), par exemple non-volatile (NVM), par exemple de type mémoire FLASH ou à changement de phase (Phase change memory, PCM, en anglais), capable de communiquer, via un bus de communication, avec une interface de mémoire non-volatile non représentée configurée pour écrire ou lire des données dans et depuis la mémoire 104.

Le microcontrôleur 100 comprend en outre, par exemple, une unité de traitement 110 (CPU) comprenant un ou plusieurs processeurs sous contrôle d'instructions stockées dans une mémoire d'instructions non représentée qui est par exemple une mémoire volatile de type à accès aléatoire (en anglais Random Access Memory, RAM).

L'unité de traitement 110 et la mémoire d'instructions communiquent, par exemple, via un bus système 140 (de données, d'adresses et de commande). La mémoire 104 est reliée au bus système 140 par exemple par l'intermédiaire d'une interface de mémoire non illustrée et par l'intermédiaire d'un bus intermédiaire non représenté. Le microcontrôleur 100 comprend en outre par exemple une interface d'entrée/sortie 108 (I/O) reliée au bus système 140 pour communiquer avec l'extérieur.

Dans l'exemple représenté, la mémoire 104 comprend un registre 105 d'options de configuration du microcontrôleur IPENR1. Le registre 105 est par exemple de 32 bits. Le contenu du registre 105 contrôle des configurations possibles IP1, IP2, IP3, IP4 etc du microcontrôleur 100. Ces configurations sont par exemple des configurations de sécurité comme par exemple celles liées à la cryptographie, par exemple les accélérateurs matériels SAES, CRYP, MCE, CCB ou RNG. Ces configurations sont par exemple des configurations liées à la taille de mémoire disponible. Ainsi, en fonction de la valeur de bits du registre, la mémoire non volatile accessible pourra évoluer par exemple entre 4 MB et 512 KB. Les configurations IP1, IP2, IP3, IP4... peuvent en outre concerner des paramètres tels que CAN, LCD, JPEG ou HCD.

Chacune des configurations est activée ou désactivée en fonction de valeurs d'octets d'option (option byte en anglais) d'un registre 110 (User_OB1) modifiable par exemple par un sous-traitant. Chacune des configurations peut également être activée ou désactivée en fonction du contenu d'un autre registre 111 (Engi_OB) d'octets d'option qui pourra être modifié par exemple uniquement pendant la production du microcontrôleur 100.

Le microcontrôleur 100 comprend par exemple une mémoire 150 (MEM3), par exemple non-volatile, de type FLASH ou à changement de phase. La mémoire 150 est par exemple la même que la mémoire 104. La mémoire 150 communique avec les autres éléments du microcontrôleur 100, par exemple, via le bus système 140. La mémoire 150 est par exemple une mémoire système c'est-à-dire qu'elle contient par exemple des secteurs mémoires uniquement accessibles par le fabricant du microcontrôleur 100. Ainsi, la mémoire 150 comprend par exemple un programme de démarrage 152 (ROT), root of trust en anglais, du microcontrôleur qui ne peut pas être mis à jour après fabrication. Il s'agit par exemple d'un programme racine immutable de confiance (immutable root of trust en anglais) qui est exécuté en premier après une réinitialisation du microcontrôleur 100. Le programme 152 a un niveau d'autorisation d'accès HDPL, qui est par exemple associé à un compteur monotonique croissant. Le niveau d'autorisation d'accès prend par exemple une valeur HDPL=HDPL0=0 lorsque le microcontrôleur 100 est en cours de fabrication. Lorsque le microcontrôleur 100 est dans un état où seul un premier étage de programme de démarrage du microcontrôleur est autorisé, alors HDPL=HDPL1=1 par exemple. Lorsqu'HDPL=HDPL1=1, alors dans un exemple, seul le programme 152 ROT est exécuté. L'état HDPL=HDPL1=1 est atteint dès que le microcontrôleur est chez un client ou un sous-traitant.

Le microcontrôleur 100 comprend par exemple une mémoire 111 (MEM2), par exemple non-volatile, de type FLASH ou à changement de phase. La mémoire 111 est par exemple la même que la mémoire 104 ou la mémoire 150. La mémoire 210 communique avec les autres éléments du microcontrôleur 100, par exemple, via le bus système 140. La mémoire 210 comprend par exemple des emplacements mémoires 119 configurés pour recevoir des éléments (User_OB_update) reçus lors de mises à jour. Ces éléments reçus lors de mises à jour sont par exemple des images de programme (fichiers en .bin par exemple).

Le microcontrôleur 100 peut intégrer d'autres circuits mettant en œuvre d'autres fonctions (par exemple, une ou plusieurs mémoires volatiles et/ou non-volatiles, ou d'autres unités de traitement), non représentées en figure 1. Parmi ces autres circuits, le microcontrôleur 100 comporte par exemple une mémoire morte ou statique 118 (ROM).

L'exemple de la figure 1 est limité en ce qui concerne la modification des configurations IP1, IP2, IP3, IP4.... En effet, à l'heure actuelle, seul le fabricant ou un sous-traitant peuvent modifier ces configurations qui peuvent concerner des paramètres de sécurité. Une fois que le microcontrôleur 100 a été mis en vente et qu'il n'est plus chez le fabricant ou le sous-traitant, les registres USER_OB1 et Engi_OB ne sont plus, à l'heure actuelle, modifiables ce qui empêche toute modification ultérieure des configurations IP1, IP2, IP3, IP4....

Les modes de réalisations décrits pallient ces désavantages en proposant un procédé de configuration du microcontrôleur 100, comprenant de modifier un registre contenant des octets d'options (User_OB1) de configuration du microcontrôleur si :
- un premier étage de programme de démarrage (ROT) du microcontrôleur (100), sécurisé par le fabricant du microcontrôleur, est exécuté ; et
- un niveau d'autorisation d'accès de programme du microcontrôleur correspond à un état parmi la fabrication du microcontrôleur (HDPL0) ou à un état où seul un premier étage de programme de démarrage du microcontrôleur (HDPL1) est autorisé.

Cette solution permet d'autoriser et de réaliser, sous certaines conditions définies et sous contrôle du fabricant, la modification des octets d'option User_OB1, même après fabrication, et même lorsque le microcontrôleur 100 est chez l'utilisateur final.

Une telle solution permet de modifier, sous le contrôle du fabricant, les configurations IP1, IP2, IP3, IP4 liées par exemple à des paramètres de sécurité, une fois que le microcontrôleur 100 a été vendu ou qu'il n'est plus chez le fabricant ou le sous-traitant. Cela permet d'activer, tout au long de la vie du microcontrôleur, des configurations du microcontrôleur 100 qui ne sont pas activées à la sortie de l'usine, par exemple lors d'un paiement d'une mise à niveau (upgrade en anglais). Cela permet en outre au fabricant du microcontrôleur d'avoir le contrôle sur les modifications de configuration incluant par exemple des paramètres de sécurité du microcontrôleur 100.

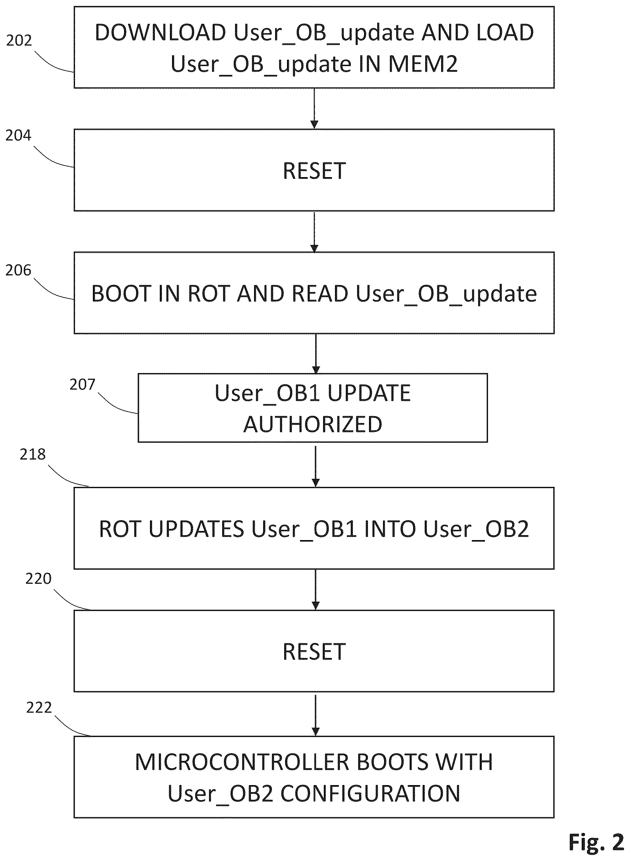

La figure 2 illustre un procédé de configuration du microcontrôleur de la figure 1.

Dans une étape 202 (DOWNLOAD User_OB_update AND LOAD User_OB_update IN MEM2), un programme User_OB_update, est téléchargé et stocké dans l'espace mémoire 119. Le programme User_OB_update comprend par exemple des instructions pour mettre à jour les octets d'options User_OB_update du registre 110 et réinitialiser le microcontrôleur 100. Le programme User_OB_update est par exemple sous forme d'une ou plusieurs images.

Dans une étape 204 (RESET), postérieure à l'étape 302, le microcontrôleur 100 est réinitialisé.

Dans une étape 206 (BOOT IN ROT AND READ User_OB_update), postérieure à l'étape 204, le microcontrôleur 100 démarre en exécutant le programme ROT qui est le premier étage de programme de démarrage qui lit les instructions présentes dans le programme User_OB_update.

Dans une étape 207 (User_OB1 UPDATE AUTHORIZED), postérieure à l'étape 206, une autorisation est obtenue pour que le registre 110 soit accessible et inscriptible de sorte que les octets d'options (User_OB1) puissent être mis à jour. Cette autorisation a par exemple comme origine le paiement au fabricant d'une mise à niveau par l'utilisateur final qui est par exemple un professionnel ou un sous-traitant du microcontrôleur.

Dans une étape 218 (ROT UPDATES User_OB1 INTO User_OB2), postérieure à l'étape 207, les octets d'option User_OB1 sont modifiés et une nouvelle version des octets d'options, appelée User_OB2, est obtenue dans le registre 110. Les configurations IP1, IP2, IP3, IP4... sont ainsi modifiées en fonction du contenu des octets d'options User_OB2 respectifs.

Dans une étape 220 (RESET), postérieure à l'étape 218, le microcontrôleur 100 est réinitialisé.

Dans une étape 222 (MICROCONTROLLER BOOTS WITH User_OB2 CONFIGURATION), postérieure à l'étape 220, le microcontrôleur 100 est de nouveau réinitialisé pour redémarrer le microcontrôleur 100 avec les nouvelles configurations permises par les octets d'option User_OB2.

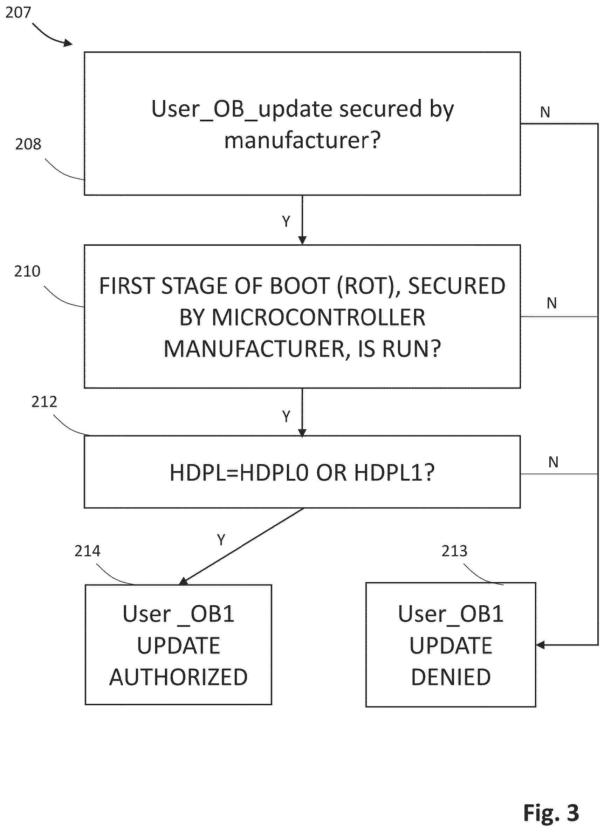

Afin que le fabricant puisse garder un contrôle sur les mises à jour des configurations du microcontrôleur 100 après fabrication, l'étape 207 contient des caractéristiques spécifiques développées dans la figure 3.

La figure 3 illustre une étape du procédé de la figure 2. Plus particulièrement, la figure 3 détaille un exemple de mise en œuvre de l'étape 207.

Dans l'exemple de la figure 3, l'étape 207 comprend par exemple plusieurs étapes intermédiaires 208, 210, 212, et 214.

Dans l'étape 208 (User_OB_update secured by manufacturer?), il est vérifié, par exemple avec le programme ROT, si le programme User_OB_update est sécurisé par le fabricant du microcontrôleur. Dans un exemple, le programme User_OB_update est considéré comme sécurisé par le fabricant si une ou des clés de sécurité fournie par le fabricant du microcontrôleur sont utilisées pour, par exemple, signer le programme. Si le programme User_OB_update est reconnu comme sécurisé (branche Y) alors une des étapes 210 ou 212, est mise en œuvre ensuite. Dans le cas contraire (branche N) alors une étape 213 (User_OB1 UPDATE DENIED) est mise en œuvre.

Dans l'étape 213, l'accès à la modification des valeurs d'octets d'options User_OB1 est refusé.

Dans l'étape 210 (FIRST STAGE OF BOOT (ROT), SECURED BY MICROCONTROLLER MANUFACTURER, IS RUN?), il est vérifié si le programme qui constitue le premier étage de démarrage, par exemple le programme ROT, est sécurisé par le fabricant du microcontrôleur 100 et qu'il est exécuté. Pour ce faire, dans un exemple, lorsque le premier étage de programme de démarrage ROT est sécurisé et exécuté, alors un premier signal RSSACCDIS est mis à une valeur donnée. Dans un exemple, le premier signal RSSACCDIS est mis à la valeur 0xA3 lorsque le premier étage de programme de démarrage ROT est sécurisé et exécuté. Ainsi, en vérifiant la valeur du premier signal, il est possible de savoir directement si le programme exécuté est le programme de démarrage sécurisé par le fabricant ou si le programme exécuté est un autre programme par exemple non sécurisé par le fabricant. Lorsque le programme qui constitue le premier étage de démarrage, par exemple le programme ROT, est sécurisé par le fabricant du microcontrôleur 100 et qu'il est exécuté, alors (branche Y) une des étapes 208 ou 212 est mise en œuvre. Dans le cas contraire (branche N) alors l'étape 213 (User_OB1 UPDATE DENIED) est mise en œuvre.

Dans l'étape 212 (HDPL=HDPL0 OR HDPL1?), si le compteur monotonique HDPL a la valeur nulle ou la valeur 1, c'est-à-dire HDPL0, HDPL1, alors (branche Y) l'étape 214 (User_OB1_UPDATE AUTHORIZED) est mise en œuvre. Si HDPL a une valeur différente de la valeur nulle ou de la valeur 1, c'est-à-dire différente de HDPL0 ou HDPL1, alors l'étape 213 est mise en œuvre.

Dans l'étape 214, la modification des octets d'option User_OB1 est autorisée. Dans l'exemple illustré, les étapes 208, 210 et 212 s'enchaînent, mais dans d'autres exemples non illustrés, elles peuvent également être mises en œuvre en parallèle ou dans un autre ordre, par exemple 208 puis 212 et 210, ou 210 puis 212 et 208, ou encore 212 puis 208 et 210. Pour maximiser le contrôle par le fabricant, pour que l'étape 214 soit mise en œuvre il convient préférentiellement que toutes les étapes 208, 210 et 212 soient validées (branche Y).

Dans un exemple non illustré d'implémentation des figures 2 et 3, tout ou partie des octets d'option User_OB2 qui résultent de la mise à jour des octets d'option User_OB1, sont réinitialisés, au bout d'un temps donné, à leur valeur initiale User_OB1 précédant leur mise à jour. Cela permet par exemple au fabricant d'autoriser une mise à niveau de la configuration du microcontrôleur pendant un temps donné à la manière de licences temporaires.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, pour ce qui est de la valeur choisie pour le premier signal RSSACCDIS, elle pourra être différente de 0xA3, du moment qu'elle ne soit pas atteignable par une simple perturbation, par exemple en utilisant une valeur à haute entropie.

Enfin, la mise en œuvre pratique des modes de réalisation et variantes décrits est à la portée de la personne du métier à partir des indications fonctionnelles données ci-dessus. En particulier, pour ce qui est des étapes 210 et 212, l'autorisation de modification du registre d'octets d'option User_OB1 pourra être donnée même si le programme exécuté au démarrage ROT n'est pas issu du fabricant du moment qu'il est sécurisé par le fabricant.

## Revendications

1. Procédé de configuration d'un microcontrôleur (100), comprenant l'autorisation de modifier un registre contenant des octets d'options (User_OB1) de configuration du microcontrôleur si :
- un premier étage de programme de démarrage (ROT) du microcontrôleur (100), sécurisé par le fabricant du microcontrôleur, est exécuté ; et
- un niveau d'autorisation d'accès de programme du microcontrôleur correspond à un état de fabrication du microcontrôleur (HDPL0) ou un état où seul un premier étage de programme de démarrage du microcontrôleur (HDPL1) est autorisé.

2. Procédé selon la revendication 1, dans lequel un premier programme (User_OB_update), sécurisé par le fabricant du microcontrôleur, est lu par ledit premier étage de programme de démarrage (ROT) et, si l'autorisation a été validée, la valeur d'un ou des octets d'options (User_OB1) du registre est modifiée suivant des instructions comprises dans le premier programme (User_OB_update).

3. Procédé selon la revendication 1 ou 2, dans lequel ledit premier étage de programme de démarrage (ROT) est stocké dans une mémoire système de type FLASH du microcontrôleur.

4. Procédé selon la revendication précédente, dans lequel, lorsque le premier étage de programme de démarrage (ROT) est exécuté, alors un premier signal (RSSACCDIS) est mis à une valeur donnée.

5. Procédé selon la revendication précédente, dans lequel le premier signal est mis à une valeur 0xA3 lorsque le premier étage de programme de démarrage (ROT) est exécuté.

6. Procédé selon l'une quelconque des revendications 1 à 5, dans lequel le niveau d'autorisation d'accès de programme (HDPL0, HDPL1) du microcontrôleur est donné par un compteur monotonique croissant (HDPL).

7. Procédé selon la revendication précédente, dans lequel la valeur nulle du compteur monotonique correspond à l'état où le microcontrôleur est en fabrication (HDPL0).

8. Procédé selon la revendication 6 ou 7, dans lequel la valeur 1 du compteur monotonique correspond à l'état où seul le premier étage de programme de démarrage (HDPL1) est autorisé.

9. Procédé selon l'une quelconque des revendications 7 ou 8 dans leur dépendance à la revendication 4, dans lequel la modification des octets d'option (User_OB1) est autorisée si le premier signal (RSSACCDIS) a ladite valeur donnée et si le compteur monotonique a la valeur nulle ou la valeur 1 (HDPL0, HDPL1).

10. Procédé selon l'une quelconque des revendications 2 à 9, dans lequel le premier étage de programme de démarrage (ROT) du microcontrôleur et le premier programme sont sécurisés avec une ou des clés de sécurité.

11. Procédé selon l'une quelconque des revendications 1 à 10, dans lequel le registre comprend plusieurs catégories d'octets d'options différents pour contrôler l'activation ou la désactivation d'une même caractéristique de configuration du microcontrôleur (100) ;
une première catégorie (Engi OB) d'octets d'options étant inscriptible uniquement pendant une phase de production par le fabricant du microcontrôleur ; et
une deuxième catégorie d'octets d'options étant inscriptible, après production, si l'autorisation est validée.

12. Procédé selon l'une des revendications 2 à 11, dans lequel, préalablement à l'étape d'autorisation, le premier programme est chargé dans une mémoire (119) de téléchargement du microcontrôleur.

13. Procédé selon la revendication précédente, dans lequel, après le chargement du premier programme (User_OB_update), le microcontrôleur est réinitialisé.

14. Procédé selon l'une quelconque des revendications 2 à 13, dans lequel lesdites une ou des valeurs d'octets d'option (User_OB2) qui ont été modifiées, sont réinitialisées, au bout d'un temps donné, à leur valeur avant modification (User_OB1).

15. Microcontrôleur, comprenant un registre d'octets d'options (User_OB1) de configuration, et configuré pour mettre en œuvre le procédé de configuration selon l'une quelconque des revendications 1 à 14.
